# EUROPEAN PATENT SPECIFICATION

(11) **EP 3 350 450 B1**
(45) Date of publication and mention of the grant of the patent: **04.05.2022**
(21) Application number: 16847088.8
(22) Date of filing: 08.09.2016
(51) Int. Cl.: F04D 13/02, F04D 29/08, F16K 11/07, F04B 9/12, F04B 53/02

(54) **ZERO EMISSION RECIPROCATING DRIVE PUMP**
EMISSIONSFREIE KOLBENPUMPE
POMPE D'ENTRAÎNEMENT ALTERNATIVE À ÉMISSION ZÉRO

(30) Priority: 17.09.2015 US 201514856977; 19.11.2015 US 201514945787
(43) Date of publication of application: 25.07.2018
(73) Proprietor: Monkey Pumps, LLC, Harvey, LA 70058 (US)
(72) Inventor: GUCCIONE, Ray, Waggaman, LA 70094 (US); MARCIS, Richard, Liberty, MO 64157 (US)
(74) Representative: Patentgruppen A/S
(86) International application number: PCT/US2016/050818
(87) International publication number: WO 2017/048582

(56) References cited:
- DE-U1- 29 818 762
- KR-A- 20080 046 141
- US-A- 4 703 623
- US-A- 5 893 707
- US-A1- 2004 047 749
- US-A1- 2005 036 896
- US-A1- 2008 131 299
- US-A1- 2010 314 835

## Description

### FIELD OF USE

The present disclosure relates generally to reciprocating drive mechanisms, and more particularly, to reciprocating drive mechanisms for enhancing the maximum supply pressure.

### BACKGROUND

Reciprocating drive mechanisms may be used to transport fluids, liquids, and/or gases and are generally used in various applications, such as manufacturing process control, hydraulic systems, and the like. The reciprocating drive mechanism may comprise a spool housed within the pump and is generally configured to move compressed air based on differential pressures within the pump. Specifically, during an upstroke motion, the spool chamber may be pressurized by supply gas, thereby causing the spool to move towards the top cover. On the other hand, during a downstroke motion, the end chamber may compress, which may pressurize the one or more spool chambers with a recovery pressure, thereby causing the spool to move towards the flange of the housing assembly.

In these pump designs, some of the gases used to drive the reciprocating drive mechanism are generally recaptured (*i.e*., gas recovery) due to mandated environmental laws, as opposed to venting into the atmosphere once the gas is used. As a result, various pump designs have been introduced to capture the gas in different exhaust ports.

Unfortunately, the use of these various pump designs are limited because the supply gas pressure usually must be reduced in order for the pump to function properly. This in turn causes the recaptured gas to also be subsequently reduced. This typically forces the user to again redirect the recovered gas back into a lower pressure system, in order for the recaptured gas to be a reusable.

Importantly, these reciprocating drive mechanism must also use low pressure gas because the seals of these pumps cannot be maintained at higher pressures. These seals may also be subject to excessive wear at higher temperatures, which can ultimately lead to warping. The seals may also lose optimal contact with the spool of the pump. The flanges holding the seal may also not sufficiently hold or retain the seal. US 4,703,623 A discloses using a rigid ring to hold a spool seal in place. DE 298 18 762 U1 and US 2005/0036896 A1 disclose different designs where it has been avoided to have and end of the spool reciprocating into and out of a flange chamber near a spool seal, so spool seals are only operating on middle portions of the spools.

Therefore, there is a need for a design enhancement for a reciprocating pump that will be capable of functioning at higher pressures. Preferably, the new reciprocating drive pump will allow the pump to function at high operating pressure and produce zero emission while preventing the seals from leaving the spool. The present description refers to the unit PSI. 1 PSI= 0,0689476 Bar.

### SUMMARY OF EMBODIMENTS

To minimize the limitations in the prior art, and to minimize other limitations that will become apparent upon reading and understanding the present disclosure, the present specification discloses a high pressure reciprocating drive mechanism.

The present invention relates to a pump comprising a reciprocating drive mechanism according to claim 1, such that the first seal is substantially prevented from popping out of place. The proximal end portion of the spool may have a length that extends into the first chamber, such that a portion of the proximal end portion of the spool may be continuously within the first chamber while performing an upstroke and a downstroke. The proximal end portion of the spool may have a length that extends approximately to a proximal end of the first seal while performing an upstroke. The housing assembly may further comprise a cover; wherein the cover may be attached at a distal end of the spool housing. The supply pressure of the reciprocating drive pump may be configured to run at a maximum pressure of approximately 1200 psi. The recovery pressure of the reciprocating drive pump may be configured to run at a maximum pressure of approximately 1100 psi. The reciprocating drive mechanism may be a fluid pump.

The length of the proximal end portion of the spool may cause the shoulder gap to be present at the peak of the downstroke of the spool. The shoulder gap may be configured to help prevent the first seal from popping out of place.

The first chamber may have an inner diameter of approximately the same as a diameter of a proximal end portion of the spool, the first seal being positioned in-between the first chamber and the second chamber and being configured to receive the proximal end portion of the spool, the lip being configured to hold and retain the first seal within the flange, an opening of the lip being configured to receive the proximal end portion of the spool, and the opening of the lip having a diameter at least less than an average diameter of an inner ring diameter and an outer ring diameter of the first seal, such that the lip substantially covers the first seal. The housing assembly may further comprise a second seal; wherein the second seal may be positioned near a distal end of the second chamber and may be configured to receive a distal end portion of the spool. The cover may be attached at a distal end of the spool housing, such that the spool contacts the cover during the upstroke of the spool. The housing assembly may further comprise a third seal; wherein the third seal may be positioned near a proximal end of the second chamber. A recovery pressure located within the first chamber may be lower than a supply pressure located within the second chamber.

It is an object to provide a reciprocating drive mechanism that produces zero emission.

It is an object to provide a reciprocating drive mechanism that may operate at a supply pressure of up to approximately 1,200 pounds per square inch.

It is an object to provide a reciprocating drive mechanism that may operate at a recovery pressure of up to approximately 1,100 pounds per square inch.

It is an object to provide a reciprocating drive mechanism with a spool longer than conventional spools of reciprocating pumps.

It is an object to provide a reciprocating drive mechanism capable of operating without dislodging the seals of the reciprocating drive mechanism at high pressure.

It is an object to provide a reciprocating drive mechanism that allows for recovered gas to be pumped via a high pressure system.

It is an object to overcome the deficiencies of the prior art.

These, as well as other components, steps, features, objects, benefits, and advantages, will now become clear from a review of the following detailed description of illustrative embodiments, of the accompanying drawings, and of the claims.

### BRIEF DESCRIPTION OF THE ILLUSTRATIVE EMBODIMENTS

The drawings show illustrative embodiments, but do not depict all embodiments. Other embodiments may be used in addition to or instead of the illustrative embodiments. Details that may be apparent or unnecessary may be omitted for the purpose of saving space or for more effective illustrations. Some embodiments may be practiced with additional components or steps and/or without some or all components or steps provided in the illustrations. When different drawings contain the same numeral, that numeral refers to the same or similar components or steps.
**FIG. 1** is an illustration of a cross-section view of one embodiment of the zero emission reciprocating drive mechanism during an upstroke.
**FIG. 2** is an illustration of a cross-section view of one embodiment of the zero emission reciprocating drive mechanism during a downstroke.
**FIG. 3** is a close up illustration of a cross-section view of the first seal, spool, and flange of a conventional reciprocating drive mechanism during the downstroke.
**FIG. 4** is a close up illustration of a cross-section view of one embodiment of the first seal, spool, and flange of a zero emission reciprocating drive mechanism during the downstroke.
**FIG. 5** is close up illustration of a cross-section view of the first seal, spool, and flange of a conventional reciprocating drive mechanism during the upstroke.
**FIG. 6** is close up illustration of a cross-section view of one embodiment of the first seal, spool, and flange of a zero emission reciprocating drive mechanism during the upstroke.

### DETAILED DESCRIPTION OF THE ILLUSTRATIVE EMBODIMENTS

In the following detailed description of various embodiments, numerous specific details are set forth in order to provide a thorough understanding of various aspects of the embodiments. However, the embodiments may be practiced without some or all of these specific details. In other instances, well-known procedures and/or components have not been described in detail so as not to unnecessarily obscure aspects of the embodiments.

While some embodiments are disclosed here, other embodiments will become obvious to those skilled in the art as a result of the following detailed description. These embodiments are capable of modifications of various obvious aspects, all without departing from the spirit and scope of protection. The figures, and their detailed descriptions, are to be regarded as illustrative in nature and not restrictive. Also, the reference or non-reference to a particular embodiment shall not be interpreted to limit the scope of protection.

In the following description, certain terminology is used to describe certain features of one or more embodiments. For purposes of the specification, unless otherwise specified, the term "substantially" refers to the complete or nearly complete extent or degree of an action, characteristic, property, state, structure, item, or result. For example, in one embodiment, an object that is "substantially" located within a housing would mean that the object is either completely within a housing or nearly completely within a housing. The exact allowable degree of deviation from absolute completeness may in some cases depend on the specific context. However, generally speaking the nearness of completion will be so as to have the same overall result as if absolute and total completion were obtained. The use of "substantially" is also equally applicable when used in a negative connotation to refer to the complete or near complete lack of an action, characteristic, property, state, structure, item, or result.

As used herein, the terms "approximately" and "about" generally refer to a deviance of within 5% of the indicated number or range of numbers. In one embodiment, the term "approximately" and "about", refer to a deviance of between 1-10% from the indicated number or range of numbers.

As used herein, the terms "reciprocal" and "reciprocally" refer to the state of being movable back and forth or to move alternately backwards and forwards.

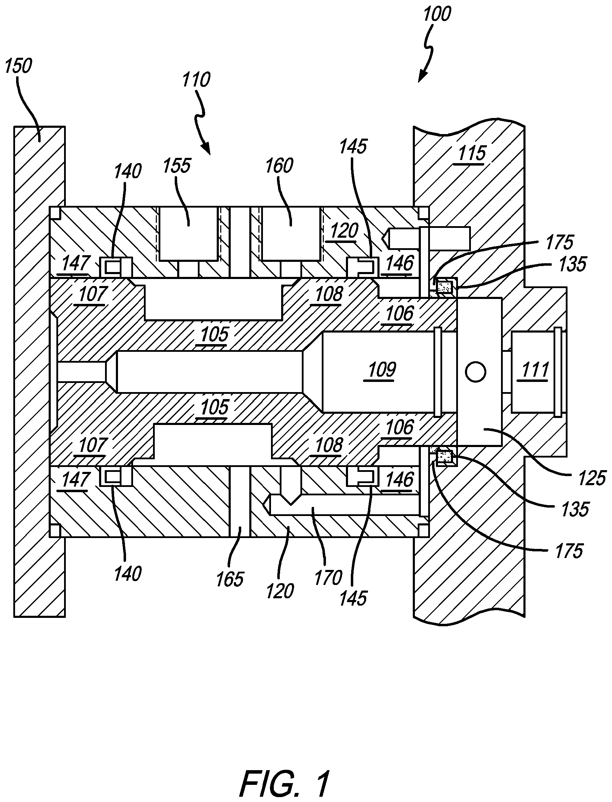

**FIG.** 1 is an illustration of a cross sectional view of one embodiment of the zero emission reciprocating drive mechanism during an upstroke. As shown in FIG. 1, one embodiment of the zero emission reciprocating drive mechanism **100,** which may also be referred to as a spool valve, may comprise: a spool **105** and a housing assembly **110.** The reciprocating drive mechanism **100** may allow fluid to flow into different paths from one or more sources. The spool **105** may be inside a housing assembly **110,** which is preferably a cylinder. The movement of the spool **105** is preferably mechanically or electrically controlled. The movement of the spool **105** generally restricts or permits the flow, thus it controls the fluid flow.

The spool **105** is generally a sliding device that may comprise lands, grooves, and/or slide valves (*e*.*g*., d slides). The lands and/or slide valves may block fluid flow through the housing assembly **110,** sometimes referred to as a valve body or may allow fluid (liquid or gas) to flow around the spool **105** and through the valve body. Typically, there may be two positions of the reciprocating drive pump **100,** a normal position and a working position. The spool **105** is the portion of the valve that controls the direction of hydraulic fluid or gas flow and may comprise one or more spool portions **107, 108,** which may secure a slide valve (not shown). For example, a slide valve may be positioned between spool portion **107** and spool portion **108** and adjacent to channels **155** and **160.** The slide valve may then alternately block and open channels in the reciprocating drive mechanism **100.** The spool **105** may also comprise a proximal end portion **106** that engages with a flange **115** and a channel **109** for allowing gas or fluid to pass.

The housing assembly **110** is generally the main housing or structure that holds and secures the spool **105** and may comprise various components, including: a flange **115,** spool housing **120,** one or more seals (*e*.*g*., first seal **135,** second seal **140,** third seal **145**), and cover **150.** The flange **115** may comprise a first chamber **125,** and the spool housing **120** may comprise a second chamber **130.** Preferably, the spool housing **120** holds and secures the main body of the spool **105** (which may contain one or more D-slides that alternately block and open or ports) via the second chamber **130.** The spool housing **120** may also comprise one or more channels **155, 160, 165, 170.** The channels **155, 160, 165, 170** may be either blocked or cleared, depending upon the position of the spool **105** in the second chamber **130** (*i.e*., upstroke versus downstroke). The first chamber **125** of the flange **115** is preferably configured to receive the proximal end portion **106** of the spool **105** when the spool **105** is in the downstroke position.

In one embodiment, the edge of the proximal end portion of the spool **105** may comprise a bevel or chamfer. In that embodiment, the chamfered edge may be between approximately 30 to 50 degrees. In another embodiment, the edge of the proximal end portion of the spool **105** may have a corner radius. In other embodiments, the edge of the proximal end portion of the spool **105** may lack a chamfer, bevel, or corner radius.

FIG. 1 also shows that the zero emission reciprocating drive mechanism **100** may comprise one or more seals for securing gas or fluid within the chambers of the reciprocating drive mechanism **100.** For example, in one embodiment, the first seal **135,** which is sometimes referred to as spool end seal, may be positioned within the distal portion of the flange **115** and in-between the first chamber **125** and second chamber **130.** The first seal **135** may also mate or engage with the proximal end portion **106** of the spool **105.** This preferably helps seal the gas or fluid pressure within the first chamber **125.** In this embodiment, the second seal **140** may be positioned within the distal portion of the second chamber **130** and may engage with the spool portion **107** of the spool **105.** Similarly, the third seal **145** may be positioned near the proximal portion **146** of the second chamber **130** and may engage with the spool portion **108** of the spool **105.** Preferably, a lip **175** is positioned over the first seal **135** to hold and secure the first seal **135.** In one embodiment, the opening of the lip **175** may have a diameter of at least less than an average diameter of an inner ring diameter and an outer ring diameter of the first seal **135,** such that the lip **175** substantially covers the first seal **135.** In a preferred embodiment, the lip **175** may extend to a length of at least 50% of the width of the first seal **135,** such that at least 50% of the first seal **135** is covered by the lip **175.** In another embodiment, the lip **175** may extend to a length of at least 75% of the width of the first seal **135,** such that at least 75% of the first seal **135** is covered by the lip **175.** These embodiments may help allow the lip **175** to prevent the first seal **135** from popping out of place or blowing over, especially when dealing with a high pressures of up to approximately 1,200 pounds per square inch. Although FIG. 1 only shows three seals, any number of seals may be used.

FIG. 1 also shows that the housing assembly **110** may comprise a cover **150** and flange **115.** In one embodiment, the cover **150** may be attached to a distal end **147** of the spool housing **120,** and the flange **115** may be attached to the proximal end **146** of the spool housing **120.**

FIG. 1 also shows that the spool **105** and housing assembly **110** may comprise one or more channels. Specifically, channels **155, 160, 165, 170** may be located inside the spool housing **120** and may comprise openings that provides fluid or gas access to the first chamber **125** and/or second chambers **130.** Similarly, in another embodiment, channel **109** may be located within the spool **105,** and channel **111** may be located within the flange **115.** Channel **109** and channel **111** may provide fluid or gas access to one another. Channel **109** and channel **111** may also provide housing for other components such as a rod. In various embodiments, channel **109** and/or channel **111** may also be in fluid/gas communication with channels **155, 160, 165, 170,** depending upon whether the spool **105** is in the upstroke or downstroke position.

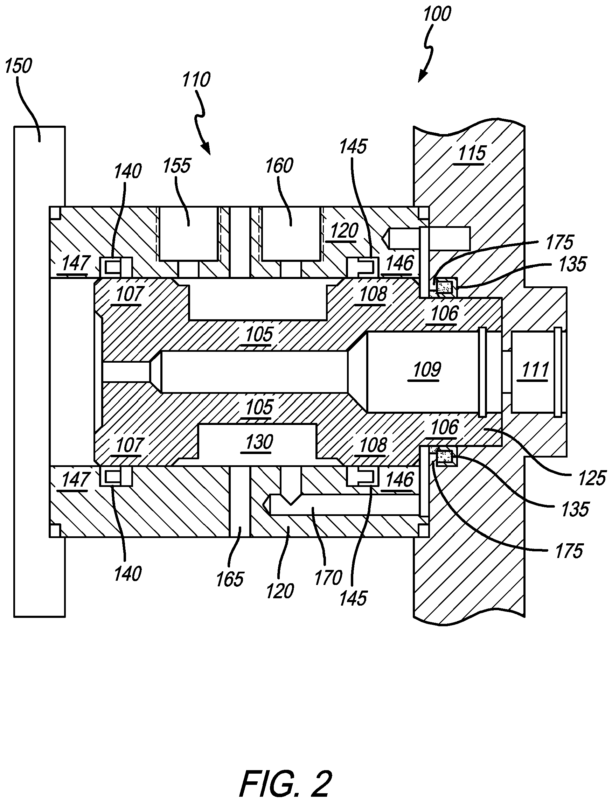

The spool **105** may also transition between a first position (*i.e.,* upstroke, as shown in FIG. 1), and a second position (*i.e.,* downstroke, as shown in FIG. 2). Specifically, the spool **105** may move upwards towards the cover **150** during an upstroke. The spool **105** may also move downwards towards the flange **115** during a downstroke. This movement of the spool **105** may occur through various mechanisms, including mechanical (*e.g.,* piston, rod), gas pressure (*e.g.,* introduction of gas), fluid pressure, electrical actuation, and the like. For example, in one embodiment, supply pressure within the second chamber **130** may cause the spool **105** to move in either in the upstroke or downstroke position.

**FIG. 2** is an illustration of a cross sectional view of one embodiment of the zero emission reciprocating drive mechanism during a downstroke. As shown in FIG. 2, one embodiment of the zero emission reciprocating drive mechanism **100** may comprise: a spool **105** and a housing assembly **110.** The housing assembly **110** may comprise: a flange **115,** spool housing **120,** first seal **135,** second seal **140,** third seal **145,** cover **150,** and channels **155, 160, 165, 170.** The spool **105** may comprise spool portions **107, 108,** channel **109,** and a proximal end portion **106.** FIG. 2 also shows the spool **105** in the downstroke position. Importantly, FIG. 2 shows that, unlike conventional reciprocating drive mechanisms, the diameter of the opening of the lip **175** of the flange **115** is almost the same diameter of the proximal end portion **106** of the spool **105.** This smaller diameter of the lip **175** preferably reduces the clearance between the flange **115** and the spool **105,** and thus, helps retain the first seal **135** from blowing out, when the zero emission reciprocating drive mechanism **100** is subject to higher pressure in the first chamber **125.**

Importantly, FIG. 2 also shows that the proximal end portion **106** of the spool **105** may be lengthened. This modification to the spool **105** preferably allows the spool **105** to immediately contact the flange **115** during the downstroke. Additionally, during the upstroke, the longer length prevents the first seal **135** from leaving or popping out of the end of the spool **105.**

By (1) providing a smaller lip diameter and (2) lengthening of the proximal end portion **106** of the spool **105,** the likelihood of the first seal **135** from blowing off the spool **105** is substantially reduced. As such, the reciprocating drive mechanism **100** may operate with zero emissions and at a much higher supply pressure and recovery pressure. In one embodiment, the supply pressure may be higher than the recovery pressure. For example, in a preferred embodiment, the supply pressure of the reciprocating drive pump **100** may operate at a maximum pressure of approximately 1200 psi. Similarly, in another preferred embodiment, the recovery pressure of the reciprocating drive pump **100** may also operate at a maximum pressure of approximately 1100 psi.

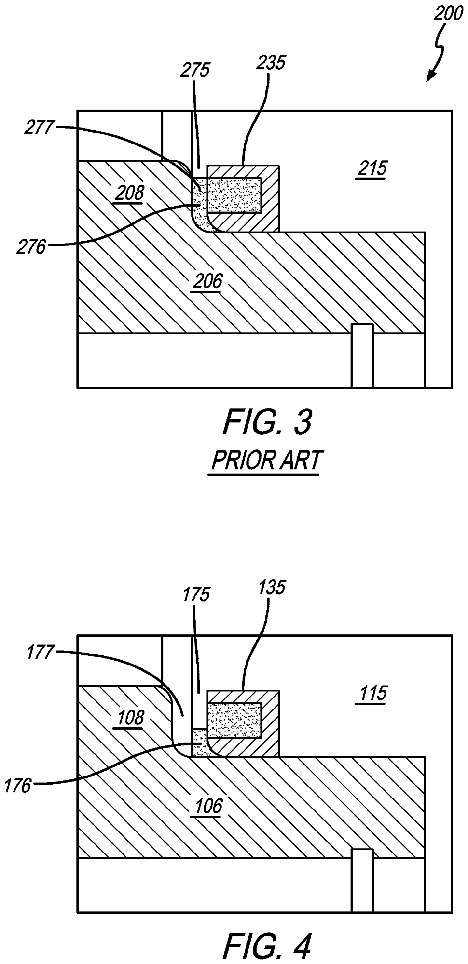

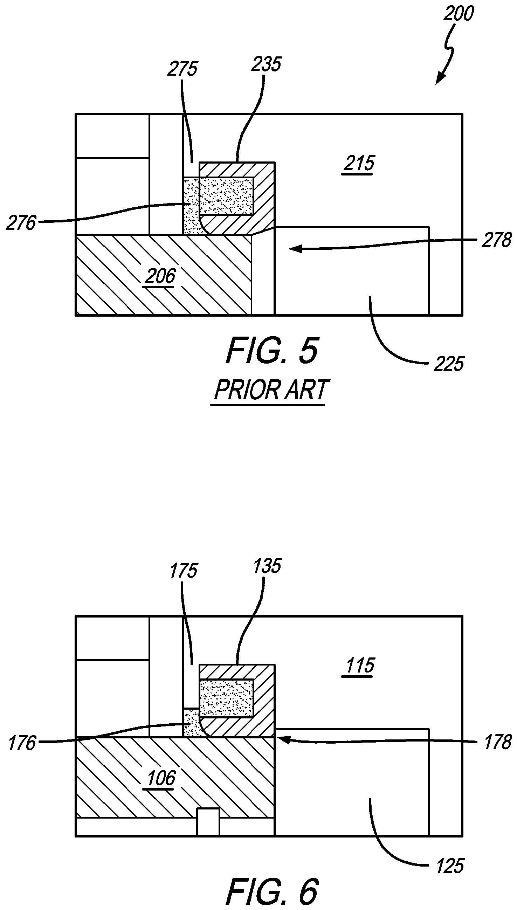

**FIG. 3** is a close up illustration of a cross sectional view of the first seal, spool, and flange of a conventional reciprocating drive mechanism during the downstroke. FIG. 3 shows the two standard features relating to first seal **235** popping or blowing during the reciprocation of the spool when pressure is high. The first is a short lip **275** and the second is a short proximal end portion of **206.** As shown in FIG. 3, the lip **275** of a conventional reciprocating drive mechanism **200** is generally shorter, and thus, provides for a larger gap **276** or clearance, which may result in the first seal popping. Additionally, the length of the proximal end portion **206** of a conventional spool, as shown, is not lengthened. The shorter length of a conventional spool may also cause the first seal to pop off. First, the spool portion **208** of a conventional spool may contact (or get very, very close to) the flange **215** or the first seal **235** during a downstroke. This is shown by shoulder gap **277** being very small or non-existent. The close proximity of the cylindrical spool portion **208** of a conventional spool to the flange **215** and small or non-existent shoulder gap **277** may cause a suction force in shoulder gap **277,** which may cause the first seal **235** to pop off and move towards shoulder gap **277.** Alternatively, during the upstroke, the shorter length of the proximal end portion **206** of a conventional spool may cause the first seal **235** to possibly leave the end of the spool, as shown in FIG. 5, and move towards a proximal end of the flange **215.**

**FIG. 4** is a close up illustration of a cross sectional view of one embodiment of the first seal, spool, and flange of a zero emission reciprocating drive mechanism during the downstroke. FIG. 4 shows a longer lip **175** and a longer proximal end portion **106.** As shown in FIG. 4, the length of the lip **175** of a reciprocating drive mechanism **100** is preferably longer, thereby providing little or no clearance or gap **176.** Additionally, the length of the proximal end portion **106** of a spool **105** is preferably longer, which helps prevent a first seal **135** from leaving the end of the spool **105** during the upstroke, because cylindrical spool portion **108** is further away from flange **115** and/or further away from the first seal **135.** This is because shoulder gap **177** is wider and thus, in an upstroke, the suction force on the first seal **135** is lessened. Moreover, because the proximal end portion **106** is longer, at the peak of the upstroke, the proximal end portion **106** covers the first seal **135** (as shown in FIG. 6) such that the first seal **135** is much less likely to pop out of place.

**FIG. 5** is close up illustration of a cross sectional view of the first seal, spool, and flange of a conventional reciprocating drive mechanism during the upstroke. As shown in FIG. 5, the lip **275** of a conventional reciprocating drive mechanism **200** is generally short, and thus, provides a large gap **276** between the flange **215** and the proximal end portion **206** of the spool. At high pressures, this large gap **276** may allow the first seal **235** to pop out of place. Additionally, the length of the proximal end portion **206** of a conventional spool is short. Thus, during the upstroke of the spool, the shorter length may cause the first seal **235** to possibly pop out of the end of the spool at the bottom of gap **278,** and possibly into the first chamber **225.** Alternatively, during the downstroke of the spool, the short length may also cause the first seal **235** to blow out distally due to pressures coming from bottom gap **278.**

**FIG. 6** is close up illustration of a cross sectional view of one embodiment of the first seal, spool, and flange of a zero emission reciprocating drive mechanism during the upstroke, according to the claimed invention. As shown in FIG. 6, lip **175** of a reciprocating drive mechanism **100** is preferably longer, thereby providing little or no clearance or gap **176** between the flange **115** and the proximal end portion **106** of the spool **105.** Additionally, the length of the proximal end portion **106** of a spool **105** is preferably longer, which covers the first seal **135** and helps prevent the first seal **135** from popping out of the end of the spool **105** though end gap **178** during the upstroke. This also helps preventing the first seal **135** from blowing out distally during the downstroke or upstroke of the spool.

## Claims

1. A pump (100), comprising a reciprocating drive mechanism comprising:
a spool (105); and
a housing assembly (110);
wherein said housing assembly (110) comprises a flange (115), a spool housing (120), a first chamber (125), a second chamber (130), and a first seal (135);
wherein said flange (115) is attached to a proximal end (146) of said spool housing (120);
wherein said first chamber (125) is located within said flange (115);
wherein said second chamber (130) is located within said spool housing (120);
wherein said spool (105) is disposed in and reciprocally movable in said second chamber (130);
wherein a proximal end portion (106) of said spool (105) is configured to move reciprocally into and out of said first chamber (125); and
wherein said first seal (135) is positioned adjacent to said first chamber (125) and said second chamber (130); wherein:
said flange (115) comprises a lip (175) extending along a width of a distal end of said first seal (135); and/or
said housing assembly (110) further comprises a shoulder gap (177) located between said flange (115) and a proximal cylindrical portion (108) of said spool (105), said shoulder gap (177) being present even at a peak of a downstroke of said spool (105), so that the suction force on the first seal (135) is lessened in an upstroke to prevent said first seal (135) from popping out of place.

2. The pump (100) of Claim 1, wherein said proximal end portion (106) of said spool (105) has a length that extends approximately to a proximal end of said first seal (135) while performing an upstroke.

3. The pump (100) of Claim 2, wherein said length of said proximal end portion (106) of said spool (105) causes said shoulder gap (177) to be present at said peak of said downstroke of said spool (105).

4. The pump (100) of Claim 1, wherein said proximal end portion (106) of said spool (105) has a length that extends into said first chamber (125), such that a portion of said proximal end portion (106) of said spool (105) is continuously within said first chamber (125) while performing an upstroke and a downstroke.

5. The pump (100) of Claim 1 or Claim 3, wherein said housing assembly (110) further comprises a cover (150);
wherein said cover (150) is attached at a distal end (147) of said spool housing (120).

6. The pump (100) of Claim 1 or Claim 4, wherein a maximum supply pressure of said reciprocating drive mechanism (100) is approximately 82.74 bar (1200 psi).

7. The pump (100) of Claim 1 or Claim 5, wherein a maximum recovery pressure of said reciprocating drive mechanism (100) is approximately 75.84 bar (1100 psi).

## Patentansprüche

1. Pumpe (100), umfassend einen hin- und hergehenden Antriebsmechanismus:
einen Steuerkolben (105); und
eine Gehäuseanordnung (110);
wobei die Gehäuseanordnung (110) einen Flansch (115), ein Steuerkolbengehäuse (120), eine erste Kammer (125), eine zweite Kammer (130) und eine erste Dichtung (135) umfasst;
wobei der Flansch (115) an einem proximalen Ende (146) des Steuerkolbengehäuses (120) angebracht ist;
wobei sich die erste Kammer (125) innerhalb des Flanschs (115) befindet;
wobei sich die zweite Kammer (130) innerhalb des Steuerkolbengehäuses (120) befindet;
wobei der Steuerkolben (105) in der zweiten Kammer (130) angeordnet und darin hin- und herbewegbar ist;
wobei ein proximaler Endabschnitt (106) des Steuerkolbens (105) konfiguriert ist, um sich hin- und hergehend in die erste Kammer (125) hinein und aus ihr heraus zu bewegen; und
wobei die erste Dichtung (135) angrenzend an die erste Kammer (125) und die zweite Kammer (130) positioniert ist;
wobei:
der Flansch (115) eine Lippe (175) umfasst, die sich entlang einer Breite eines distalen Endes der ersten Dichtung (135) erstreckt; und/oder
die Gehäuseanordnung (110) ferner einen Schulterspalt (177) umfasst, der sich zwischen dem Flansch (115) und einem proximalen zylindrischen Abschnitt (108) des Steuerkolbens (105) befindet, wobei der Schulterspalt (177) sogar an einer Spitze eines Abwärtshubs des Steuerkolbens (105) vorhanden ist, sodass die Saugkraft auf die erste Dichtung (135) bei einem Aufwärtshub verringert wird, um zu verhindern, dass die erste Dichtung (135) aus ihrer Position herausspringt.

2. Pumpe (100) nach Anspruch 1, wobei der proximale Endabschnitt (106) des Steuerkolbens (105) eine Länge aufweist, die sich ungefähr bis zu einem proximalen Ende der ersten Dichtung (135) erstreckt, während ein Aufwärtshub ausgeführt wird.

3. Pumpe (100) nach Anspruch 2, wobei die Länge des proximalen Endabschnitts (106) des Steuerkolbens (105) bewirkt, dass der Schulterspalt (177) an der Spitze des Abwärtshubs des Steuerkolbens (105) vorhanden ist.

4. Pumpe (100) nach Anspruch 1, wobei der proximale Endabschnitt (106) des Steuerkolbens (105) eine Länge aufweist, die sich in die erste Kammer (125) erstreckt, sodass sich ein Abschnitt des proximalen Endabschnitts (106) des Steuerkolbens (105) kontinuierlich innerhalb der ersten Kammer (125) befindet, während ein Aufwärtshub und ein Abwärtshub ausgeführt werden.

5. Pumpe (100) nach Anspruch 1 oder Anspruch 3, wobei die Gehäuseanordnung (110) ferner eine Abdeckung (150) umfasst;
wobei die Abdeckung (150) an einem distalen Ende (147) des Steuerkolbengehäuses (120) angebracht ist.

6. Pumpe (100) nach Anspruch 1 oder Anspruch 4, wobei der maximale Versorgungsdruck des hin- und hergehenden Antriebsmechanismus (100) etwa 82,74 bar (1200 psi) ist.

7. Pumpe (100) nach Anspruch 1 oder Anspruch 5, wobei ein maximaler Rückstelldruck des hin- und hergehenden Antriebsmechanismus (100) etwa 75,84 bar (1100 psi) ist.

## Revendications

1. Pompe (100), comprenant un mécanisme d'entraînement alternatif comprenant :
un corps (105) ; et
un ensemble boîtier (110) ;
ledit ensemble boîtier (110) comprenant une bride (115), un boîtier de corps (120), une première chambre (125), une seconde chambre (130) et un premier joint d'étanchéité (135) ;
ladite bride (115) étant fixée à une extrémité proximale (146) dudit boîtier de corps (120) ;
ladite première chambre (125) étant située à l'intérieur de ladite bride (115) ;
ladite seconde chambre (130) étant située à l'intérieur dudit boîtier de corps (120) ;
ledit corps (105) étant disposé et mobile alternativement dans ladite seconde chambre (130) ;
une partie d'extrémité proximale (106) dudit corps (105) étant conçue pour se déplacer alternativement dans ladite première chambre (125) et hors de celle-ci ; et
ledit premier joint d'étanchéité (135) étant positionné adjacent à ladite première chambre (125) et à ladite seconde chambre (130) ;
ladite bride (115) comprenant une lèvre (175) s'étendant le long d'une largeur d'une extrémité distale dudit premier joint d'étanchéité (135) ; et/ou
ledit ensemble boîtier (110) comprenant en outre un espace d'épaulement (177) situé entre ladite bride (115) et une partie cylindrique proximale (108) dudit corps (105), ledit espace d'épaulement (177) étant présent même au niveau d'un sommet d'un course descendante dudit corps (105), afin que la force d'aspiration sur le premier joint d'étanchéité (135) soit réduite dans une course ascendante pour empêcher ledit premier joint d'étanchéité (135) de sortir brusquement de sa place.

2. Pompe (100) selon la revendication 1, ladite partie d'extrémité proximale (106) dudit corps (105) possédant une longueur qui s'étend approximativement jusqu'à une extrémité proximale dudit premier joint d'étanchéité (135) tout en effectuant une course ascendante.

3. Pompe (100) selon la revendication 2, ladite longueur de ladite partie d'extrémité proximale (106) dudit corps (105) amenant ledit espace d'épaulement (177) à être présent au niveau dudit sommet de ladite course descendante dudit corps (105).

4. Pompe (100) selon la revendication 1, ladite partie d'extrémité proximale (106) dudit corps (105) possédant une longueur qui s'étend dans ladite première chambre (125), de sorte qu'une partie de ladite partie d'extrémité proximale (106) dudit corps (105) soit en permanence à l'intérieur de ladite première chambre (125) tout en effectuant une course ascendante et une course descendante.

5. Pompe (100) selon la revendication 1 ou la revendication 3, ledit ensemble boîtier (110) comprenant en outre un couvercle (150) ;
ledit couvercle (150) étant fixé au niveau d'une extrémité distale (147) dudit boîtier de corps (120).

6. Pompe (100) selon la revendication 1 ou la revendication 4, une pression d'alimentation maximale dudit mécanisme d'entraînement alternatif (100) étant d'environ 82,74 bars (1200 psi).

7. Pompe (100) selon la revendication 1 ou la revendication 5, une pression de récupération maximale dudit mécanisme d'entraînement alternatif (100) étant d'environ 75,84 bars (1100 psi).
